Europäisches Patentamt

European Patent Office

Office européen des brevets

(11) Publication number: **0 088 627**
A2

(19)

## EUROPEAN PATENT APPLICATION

(21) Application number: 83301233.9

(51) Int. Cl.³ **G 01 H 1/00**

(22) Date of filing: 08.03.83

(30) Priority: 09.03.82 GB 8206827

(43) Date of publication of application: 14.09.83
Bulletin 83/37

(84) Designated Contracting States: DE FR IT

(71) Applicant: Tecalemit Electronics Limited, Longbridge
Road, Plymouth Devon, PL6 8LA (GB)

(72) Inventor: Landers, Peter Carey, Great Hatch, Bere
Alston Devon (GB)
Inventor: Bogue, Robert William, Hilltown Cottage,
Lamerton Near Tavistock Devon (GB)
Inventor: Sample, Peter, High Tor Stoke Road, Noss
Mayo Near Plymouth Devon (GB)

(74) Representative: Abbott, David John et al, Abel & Imray
Northumberland House 303-306 High Holborn, London,
WC1V 7LH (GB)

(54) Vibration monitoring apparatus.

(57) Portable vibration monitoring apparatus analyses into dif-
ferent frequency bands electrical signals generated by a trans-
ducer from the vibrations at selected points on a machine. The
magnitudes of the signals in the different bands are compared
with stored values expected for the particular point and an
indication is displayed if the magnitude is too high as a possible
precursor to machine breakdown. The results of the com-
parisons are stored in the apparatus. The apparatus has a
microprocessor for performing the selection of stored values,
the comparisons and the storage of the results. A keyboard is
provided to enter the identity of the point under test and to
cause the apparatus to display more details of the results of the
comparisons. As part of a system a second, fixed, apparatus
may be provided which can be connected to the portable
apparatus to enter the stored values and to read from it the
results of the comparisons. The fixed apparatus may have a
printer. The portable apparatus may have a low power mode in
which the stored results are saved.

0088627

## VIBRATION MONITORING APPARATUS

This invention relates to vibration monitoring apparatus.

It is well known that breakdowns of machinery are frequently preceded by an increase in the amount of vibration produced by the machinery whilst it is in operation, and that the frequency of the increased vibration is dependent on the nature of the source of the vibration. For example, at a bearing vibrations at shaft rotation frequency may indicate a region of roughness on the shaft, vibrations at ball bearing rotation frequency may indicate a chipped or cracked ball bearing and vibrations at higher frequency may indicate damage to the teeth of cogs on the shaft. A machine may have several places at which the vibrations should be monitored if most of the problems likely to indicate incipient breakdowns are to be detected.

Hitherto, the analysis of vibrations of machinery has required skilled personnel to decide whether the vibrations are of a normal level for the machine or if some damage has occurred which should be put right without delay. Moreover, the apparatus used in performing the analysis is usually in a laboratory and is not suitable for taking into a workshop. This means that a recording of the vibrations has to be made on the machine and replayed in the laboratory, which is time-consuming.

It is an object of the present invention to provide vibration monitoring apparatus which is more convenient to use and which can reduce the amount of time needed to be spent on the monitoring operation by skilled personnel.

0088627

According to one aspect of the present invention there is provided vibration monitoring apparatus including transducing means for converting mechanical vibrations into electrical signals, analysing means for separating the electrical signals into components in different frequency bands, comparing means for comparing the magnitudes of the electrical signals and the components with predetermined values, and means for indicating if the predetermined values are exceeded, wherein the apparatus includes computing means having processing means and data storage means, of which the storage means records indications of the frequency bands and the predetermined values, and the computing means provides control signals for the analysing means, performs the comparisons of the magnitudes of the electrical signals and the components with the predetermine values and outputs corresponding signals to the indicating means.

The processing means may be a microprocessor.

The apparatus may include a keyboard for an operator to enter data identifying a position at which the transduci means is placed. The keyboard may also be arranged to permit the indicating means to display the magnitudes of the electrical signals and the frequencies of the frequency bands. The storage means may record the results of the comparisons and these may be output to other computing mean which may print the results. The other computing means may be capable of entering into the storage means control signals for the analysing means and predetermined values for enabling further investigations to be made by the apparatus.

According to a second aspect of the invention there is provided vibration monitoring apparatus consisting of a portable unit with a transducing probe which can be placed on a monitoring stud on a machine to produce electrical signals corresponding to the mechanical vibrations at the stud, the unit including adjustable filter means for selecting the electrical signals within a particular frequency band, comparing means for comparing the magnitude of electrical signals within the particular frequency band with a predetermined value, means for indicating the result of the comparison, and means for adjusting the frequency band of the filter means and the predetermined value depending on the particular stud on which the probe is placed.

The unit may include storage means for recording the results of the comparisons in association with identifications of the corresponding studs.

The apparatus may include a second unit having computing means to which the portable unit may be connected. The second unit may also have charging means for recharging batteries in the portable unit. The second unit have printing means for producing a printed output of the results recorded in the storage means of the portable unit. The portable unit may include in its storage means data for adjustment of the filter means and for setting the predetermined values with means for preventing alteration of the stored data, and the second unit may have means for overriding the preventing means so as to permit alteration of the stored data.

The portable unit may include computing means having processing means with a program stored in a read-only memory and a random access memory as storage means for data. Display means and a keyboard may be provided to enable an operator to read indications of the results of the comparisons and to enter identification numbers for the studs. The computing means may have a low power mode which is automatically implemented when the batteries become partially discharged; in the low power mode the processing means is disabled, the random access memory retains the data stored in it, and an indication that the computing means is in the low power mode is displayed.

In order that the invention may be fully understood and readily carried into effect it will now be described with reference to the accompanying drawings, of which:-

FIGURE 1 shows one example of a portable unit forming part of vibration monitoring apparatus according to the invention;

FIGURE 2 shows one example of a work station forming a second unit with portable unit plugged into it;

FIGURE 3 is a block diagram of a circuit of a portable unit according to an example of the invention;

FIGURE 4 is a circuit diagram of the analogue input and conversion circuits of the circuit of Figure 3;

FIGURE 5 is a circuit diagram of a probe amplifier; and

FIGURE 6 shows the circuit of the 1 kHz filter used in Figure 4.

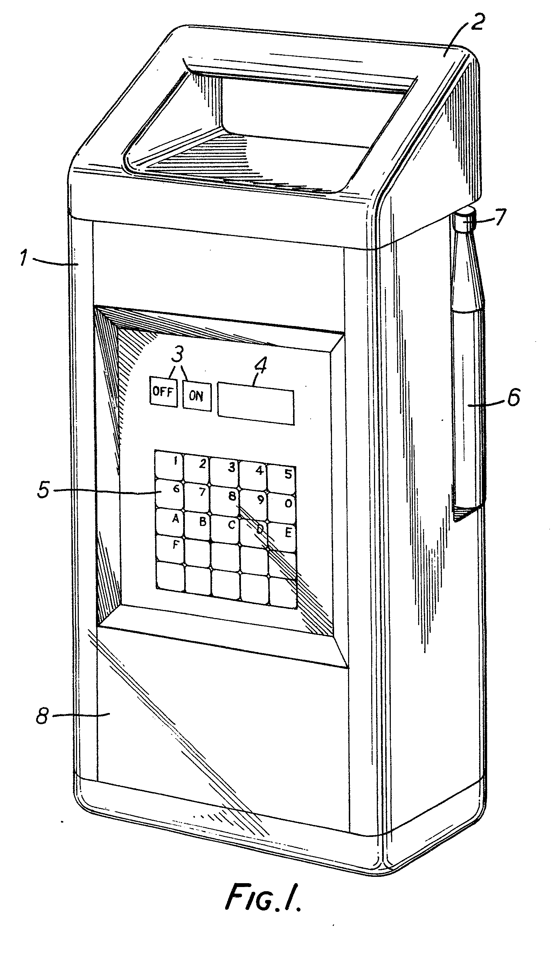

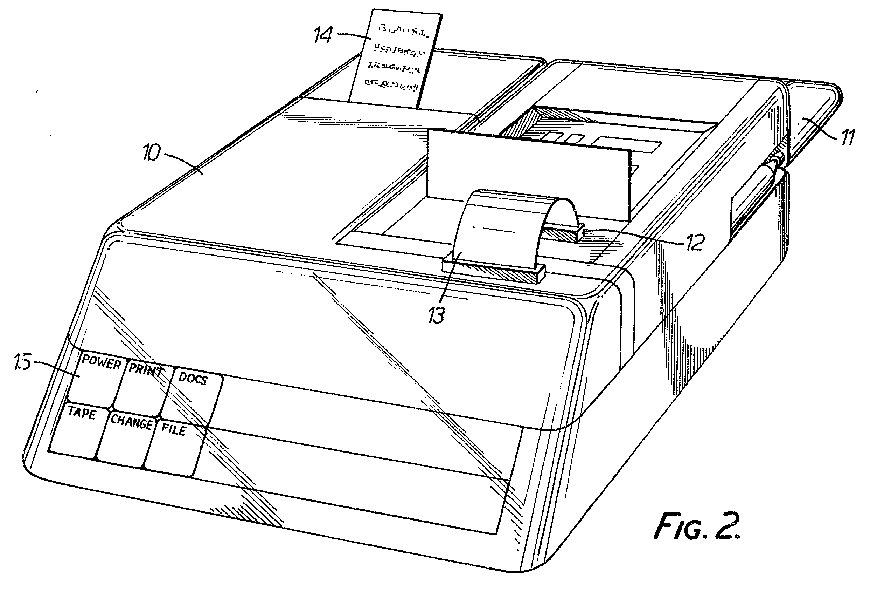

The embodiment of the invention to be described with reference to the accompanying drawings is primarily intended for use by staff taking routine measurements of vibration at various places on machinery in a factory or other works. It also allows an engineer in charge of the machinery to program the instrument, so that it takes the measurement which are appropriate to each position, thereby enabling the apparatus to achieve higher sensitivity to vibrations indicating incipient problems. The portable unit shown in Fig.1 records the measurement of the vibration levels taken at the different positions so that there is no need for the operator to write down results and consequently errors are avoided. When a portable unit is returned to its base after use, it is plugged into the work station shown in Figure 2, so that the recorded data can be extracted from the storage in the portable unit and printed out by the work station on a simple standard record sheet which can then be given to the engineer in charge. Alternatively, the work station may be connected to a computer so that the data extracted from the portable unit can be transferred directly to the computer for storage and analysis.

The data recorded for each vibration measurement will comprise the date and time of measurement, the number allocated to the particular measuring point, the values recorded and possibly also an indication of the significan of these values. The data may also include details of the centre frequencies of the narrow bands when these are employed and an indication of the acceptable level of vibration for the particular measuring point in the various bands.

In a typical application, the operator carries the portable unit to the machine, notes the measuring point number from a position adjacent to the measuring point and enters that number into the unit by means of the keyboard. He then takes the probe from the back of the portable unit and places it on the measuring stud at the point, so that the unit can then respond to the amount of vibration at the stud. The portable unit has a display which tells the operator that the unit has recorded the vibration level, possibly also providing an indication of that level and whether it is within the limits specified for that particular measuring point. The operator then proceeds to the next measuring point and repeats the process, this continuing until the vibration levels at all of the measuring points have been taken.

Figure 1 shows one example of a portable unit having a body 1 incorporating a handle 2. A liquid crystal displa 4 is provided by which the unit displays the vibration levels and provides indications as mentioned above. There is in addition a keyboard 5 having 25 keys incorporating on/off keys 3 and by means of which the operator can enter the number of measuring point and instruct the unit to perform the different operations required. A probe 6 incorporating an accelerometer with a head 7 fits into a recess in the back of the unit and can be drawn away from it by a coiled cable also kept in the back of the unit. Not shown in Figure 1, beneath a flap 8 is a socket by means of which the circuitry of the portable unit can be connected to a work station.

Preferably the portable unit should be reasonably light in weight, weighing for example not more than 2 kg and should be sealed against the ingress of dirt and water. The casing 1 and the internal parts should be sufficiently robust to withstand the likely treatment of the unit in a factory and the controls should be so made as to be operable easily by the operator possibly in difficult conditions.

Figure 2 shows one example of a work station as part of apparatus according to the invention and consisting of a casing 10 having a space for receiving a portable unit 11. The portable unit 11 is connected to the work station by means of a plug 12 connected by a ribbon cable 13 to the work station. The work station has a printing mechanism 14 for producing a printed output of the data recorded in the portable unit 11. In addition, the work station has a number of keys 15 for instructing the station in the operation required. The work station may have a connectio to a separate computer suitably programmed to receive the data and analyse it. The work station may include other circuitry, for example, a magnetic tape cassette recorder for the long term storage of data and also an interface for converting the signal read from the portable unit to a form suitable for application to a conventional computer bus system such as, for example, RS 232 C or IEEE 488.

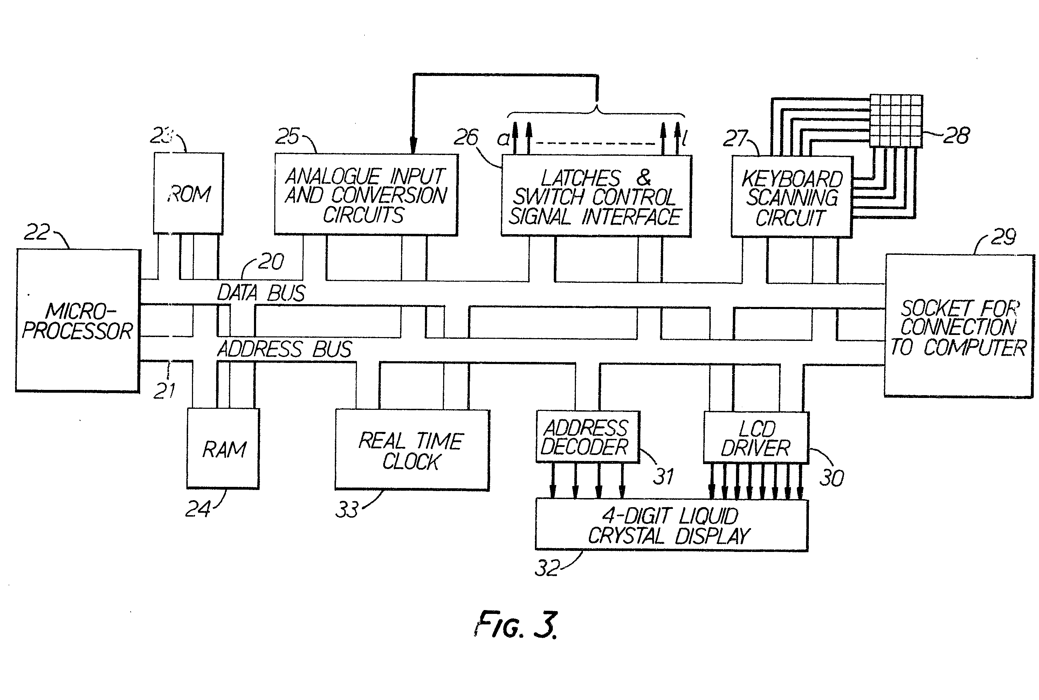

The circuitry of the portable unit as shown in Figure 3 follows conventional microcomputer practice in having an 8-bit data bus 20 and 16-bit address bus 21 connecting a microprocessor 22 to a read-only memory (ROM) 23 in which programmed data is stored and a random access memory (RAM) 24. The data and address buses 20 and 21 are also connected to analogue input and conversion circuits 25 which will be described in detail with reference to Figure ∠ output latches and a switch control signal interface 26 which provides control signals for switches in the circuits 25, a keyboard scanning circuit 27 connected to row and column conductors of a keyboard 28, an output socket 29 suitable for connection to a computer or to the work station liquid crystal display driver circuits 30 and address decode circuits 31 which together drive a 4-digit liquid crystal display 32, and a real time clock 33.

In a particular example of the invention, the microprocessor 22 is of the type 6802, the ROM 23 is of the type 2732 and the RAM 24 consists of two integrated circuits of the type 5114. The real time clock 33 is formed by an integrated circuit of the type 58174, the keyboard scanning circuit includes an integrated circuit of the type 74 C 923 which handles the inputs from twenty of the keys of the keyboard 28 together with a decoder and latches for handling the inputs from the other five keys of the keyboard. The liquid crystal display 32 is a conventional display having four 7-segment digits.

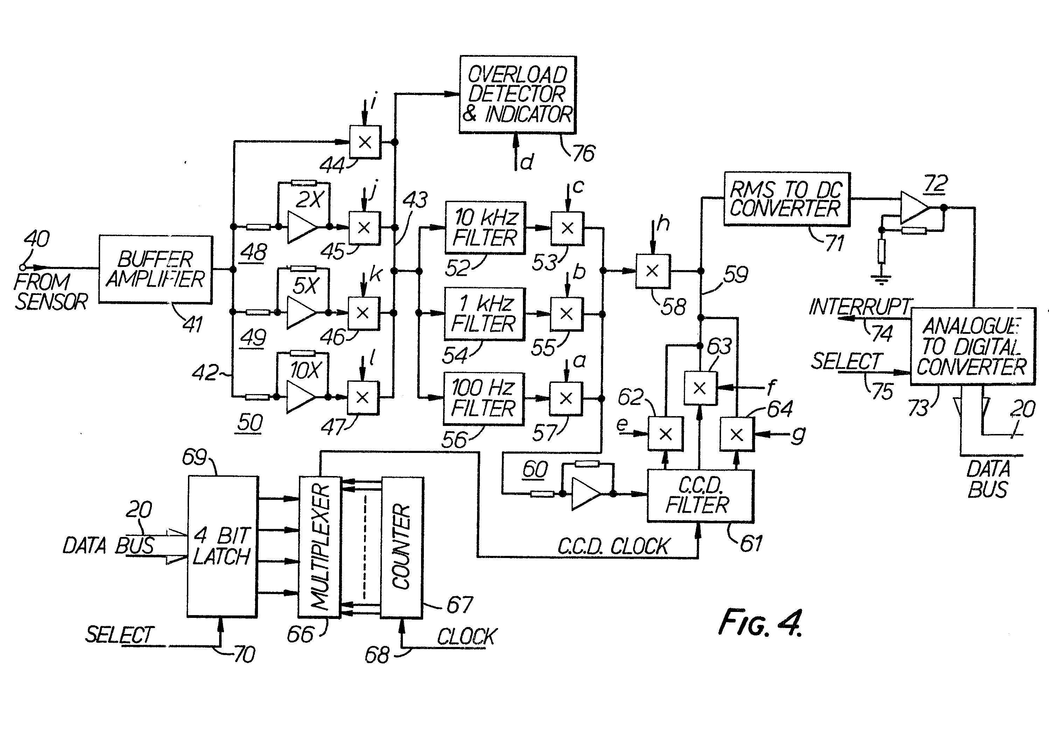

The analogue input and conversion circuits 25 will now be described with reference to Figure 4 and include twelve switches which control the operation of the circuits, which switches are operated by signals $a$ to $l$ produced by the unit 26.

In Figure 4, the electrical signals from the probe appear at a terminal 40 and are applied via a buffer amplifier 41 to a conductor 42. The conductor 42 is connected via four parallel paths to a conductor 43, the paths including switches 44, 45, 46 and 47 respectively which are operated by signals $i$, $j$, $k$ and $l$ from the unit 26. In the first path, the conductor 42 is connected directly to the switch 44, whereas in the other three paths the conductor 42 is connected via signal amplifiers 48, 49 and 50 having gains of two, five and ten times respectively. The conductor 43 is connected via three parallel paths to a conductor 51.

The first path includes a 10 kHz anti-aliasing filter 52 in series with a switch 53 controlled by a signal c, the second path includes a 1 kHz anti-aliasing filter 54 in series with a switch 55 operated by signal b, and the third path includes a 100 Hz anti-aliasing filter 56 in series with a switch 57 operated by a signal a. The signals a, b and c are obtained from the unit 26. A conductor 51 is connected via a switch 58 controlled by a signal h from the unit 56 to a conductor 59. The conductor 51 is also connected through a buffer amplifier 60 to a one-third octave monolithic switched capacitor bandpass filter 61. The filter 61 is of the type R 5604 marketed by the Reticon Corporation, of Wellesley, Massachusetts. The filter 61 which uses charge-coupled device technology has three outputs which are respectively connected to the conductor 59 through switches 62, 63 and 64. The switches 62, 63 and 64 are controlled by signals e, f and g from the unit 26. The centre frequency of the filter 61 is controlled by the frequency of a CCD clock frequency applied to it via a conductor 65 which receives the clock signals from a multiplexer 66 to which are applied the outputs of a counter 67 driven by a 2 MHz clock signal applied via a conductor 68. The operation of the multiplex 66 is controlled by data stored in a 4-bit latch 69 which receives its data from the data bus 20 under the control of a chip select signal applied via a conductor 70 from a suitable address decoder. The CCD clock has a frequency

0088627

about fifty-four times the filter centre frequency and has in all sampled data systems signals having a frequency about half that of the sampling frequency will be aliased and may appear as outputs. In order to avoid such spurious outputs the anti-aliasing filters 52, 54 and 56 are provided and are selectively switched into circuit to avoid aliasing difficulties.

The signals appearing on the conductor 59 are alternating voltages and as a first step to converting them to digital signals they are applied to an RMS to DC converter 71 which may be of the type AD 536 A manufactured by National Semiconductor. The DC output of the converter 71 is applied via a buffer amplifier 72 to an analogue-to-digital converter 73. The converter 73 which is of the type ADC 803 is connected to the data bus 20 and also produces an interrupt signal on a conductor 74 which is applied to the microprocessor 22 to initiate an interrupt routine for the entry of data from the converter 73 into the random access memory 24. Chip select signals are applied to the converter 73 via a conductor 75.

The conductor 43 is also connected to an overload detector and indicator 76 which responds to excessively large inputs of the conductor 43 and produces an indication to the operator that an overload of the apparatus has occurred. The overload indication can be cancelled by the application of a switch control signal $d$ to the unit 76.

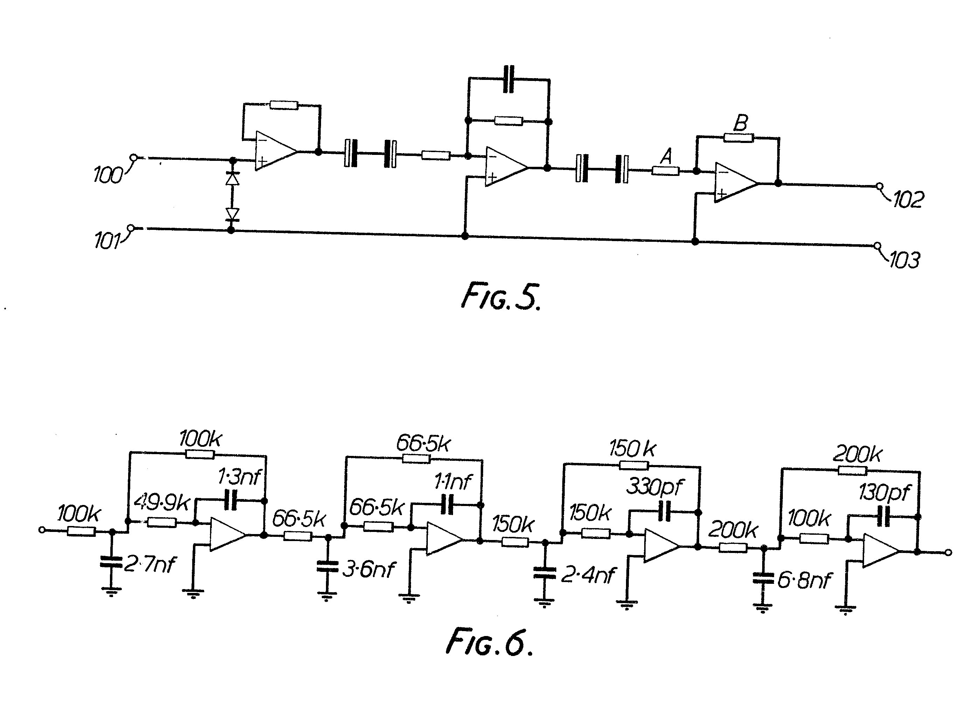

The probe 6 contains a piezo-electric accelerometer mechanically coupled to the sensing head 7. In one example of the apparatus the accelerometer is manufactured by Orbit Controls Limited. This accelerometer produces a nominal charge of 20 picocoulombs per g (acceleration due to gravity) and the device has terminal capacitance of 800 picofarads. The probe also includes an amplifier the circuit of which is shown in Figure 5. The accelerometer is connected between terminals 100 and 101 and the amplified output appears between terminals 102 and 103. The integrated circuit amplifiers included in the amplifier are of the type LF 347 which contains four such amplifiers. The resistors A and B have values chosen to match the output of the accelerometer to the input at 40 of the analogue input circuits of the apparatus.

Figure 6 shows the circuit diagram of the 1 kHz filter 54 shown in Figure 4. The circuits of filters 52 and 56 are exactly the same except that in the case of the filter 52 all of the resistors have values one-tenth of those shown in Figure 6, and in the filter 56 all of the resistors have values ten times those shown in Figure 6.

The operation of the apparatus will now be described with reference to Figures 3 and 4. The program of the microprocessor 22 is stored in ROM 23 and vibration reference data is stored in the RAM 24. This data is entered from the work station where it may be stored on a magnetic tape cassette, for example. Alternatively, other forms of long term storage of the reference data may be used such as, for example, floppy or hard magnetic disc or EPROM. The program of the microprocessor is so arranged that the reference data can only be entered from the keyboard 28, whilst the instrument is connected to the work station and whilst inputs can be made from the keyboard 28, these are prevented from being able to alter the reference data. The form of the reference data consists for each measurement point of the number of that point, an indication of the braod band vibration level and of the levels of vibration in three distinct one-third octave bands of frequencies selected so as to match local resonances and rotation speeds. The particular selected frequencies will also be stored in association with the measurement point number. Typically, the one-third octave narrow bands have frequencies selected to match the rate of rotation of a shaft, the passage frequency of balls in a ball bearing and the resonance frequencies of longitudinal vibrations along the shaft. Another frequency which might be chosen is a gear-tooth engagement frequency.

In one form of the apparatus the RAM 24 has sufficient capacity for storing the vibration reference for 48 points and the four measured levels for each of those points.

The operator using the apparatus would visit the measuring points in turn and after entering the measurement point number by means of the keyboard 28 will couple the head 7 of the probe 6 (Figure 1) on to the stud at the measuring point for a, for example, 20 second sampling period. During this period the microprocessor 22 will work through its program and record indications of the level of the vibration in the broad band and the three narrow bands specific to that measurement point. The signals from the probe are applied to the circuitry of Figure 4 via the terminal 40 and after amplification in the buffer amplifier 41 are amplified by a factor of 1, 2, 5 or 10, depending on which factor is appropriate to the vibration level expected. The amplified signal may exceed an overload value if, for example, some failure has occurred and in such a case the overload detector would produce an indication that the vibration is excessive, possibly indicating that the machine should be stopped without delay. The amplified signals pass through one of the anti-aliasing filters 52, 54 and 56, depending on whether the level measurement at the particular time is a broad band or a narrow band one and at what frequency the narrow band lies. The filtered signals pass through the switch 58 for a broad band measurement and via the CCD filter 61 and one of the switches 62, 63 and 64 for the narrow band measurements. The particular frequencies of the narrow bands are set by the CCD clock signal applied via conductor 65 to the filter 61 and this CCD clock signal is derived in response to data entered in the latch 69 which controls the multiplexer 66 to which the outputs of the counter 67 are applied. Thus in selecting the three narrow bands the microprocessor must operate one of the switches 44 to 47 to select the particular signal level, one of the switches 53, 55 and 57 to select the output of one of the anti-aliasing filters, the number in the latch 69 and one of the switches 62, 63 and 64 to select the particular one of the one-third octave outputs of the filter 61.

Both broad and narrow band vibration signals appear on the conductor 59 and are converted to a d.c. value by converter 71 which is applied to the analogue-to-digital converter 73 generating an 8-bit output which is applied to the data bus 20 and stored as the representation of the particular vibration level. The microprocessor program may include comparing the measured vibration levels with, for example, one and a half times the expected levels, and if the measured level exceeds this value it will implement the generation of an alarm display. In any case, the microprocessor 22 will cause the generation of an output on the display 32 indicating that the vibration levels at the particular point have been measured and the indications of those levels stored. It may be arranged that the operator could by operation of keys of the keyboard 28 produce a display of the actual

0088627

vibration levels stored.

When the vibration levels at all of the points have been measured, the portable unit is taken to the work station where the microprocessor 22 is caused to transfer the measured levels from the RAM 24 to the work station and also produce a printed output of those levels. The printed output would also include an indication if any of the measurement points had been missed. The storage of the levels may also be recorded in some longer term storage medium for analysis of the vibration behaviour of the machine over an extended period.

As an alternative to the operator keying in the numbers of the measurement points, the program of the microprocessor 22 may be arranged to generate the numbers sequentially, so that the operator is required to visit the measurement points in numerical order. The apparatus may include means for detecting when a particular vibration level is very much smaller than would normally be expected, so that possible mistakes in the application of the probe to the stud at the measurement points would be detected.

As the portable unit is powered by rechargeable batteries, the work station will include means for recharging the batteries. Should the batteries become discharged below a safe level during the use of the unit, it may be arranged to switch to a standby mode in which the microprocessor is disabled and the available power is used to maintain the data stored in the RAM.  The display
may include some indication when a change tò the
standby mode has taken place.

WHAT WE CLAIM IS:

1.      Vibration monitoring apparatus including transducing means for converting mechanical vibrations into electrical signals, analysing means for separating the electrical signals into components in different frequency bands, comparing means for comparing the magnitudes of the electrical signals and the components with predetermined values, and means for indicating if the predetermined values are exceeded, wherein the apparatus includes computing means having processing means and data storage means, of which the storage means records indications of the frequency bands and the predetermined values, and the computing means provides control signals for the analysing means, performs the comparisons of the magnitudes of the electrical signals and the components with the predetermined values and outputs corresponding signals to the indicating means.

2.     Apparatus according to claim 1 wherein the analysing means includes filter means for selecting electrical signals lying in a particular frequency band and means for producing a digital indication of the magnitude of the selected electrical signals for application to the computing means.

3.     Apparatus according to claim 2 wherein the filter means is arranged to pass selected electrical signals lying in different frequency bands to different outputs and the analysing means includes switches for connecting the different outputs to the means for producing a digital indication, whereby digital indications representing the magnitudes of vibrations in the different frequency bands can be selectively applied to the computing means.

4.      Apparatus according to claim 1, 2 or 3 wherein the analysing means includes amplifier means for the electrical signals controlled by the computing means.

5.      Apparatus according to any preceding claim including a keyboard by means of which an operator can enter data identifying a position at which the transducing means is placed, the computing means being responsive to such data to select the predetermined values appropriate to that position.

6.      Apparatus according to claim 5 wherein the computing means is responsive to inputs from the keyboard to display indications of the magnitudes of the electrical signals and the frequencies of the frequency bands.

7.      Apparatus according to any preceding claim wherein other computing means is provided, the storage means is arranged to record the results of the comparisons, and the computing means can output the recorded results to the other computing means.

8.      Apparatus according to claim 7 wherein the other computing means records and is capable of entering into the storage means control signals for the analysing means and predetermined values.

9.      Apparatus according to any preceding claim wherein the processing means is a microprocessor.

10.      Vibaration monitoring apparatus consisting of a portable unit with a transducing probe which can be placed on a monitoring stud on a machine to produce electrical signals corresponding to the mechanical vibrations at the stud, the unit including means for selecting the electrical signals within a particular frequency band, comparing means for comparing the magnitude of electrical signals within the particular frequency band with a predetermined value, means for indicating the result of the comparison, and means for adjusting the frequency band of the filter means and the predetermined value depending on the particular stud on which the probe is placed.

11.      Apparatus according to claim 10 wherein the means for selecting the electrical signals within a particular frequency band includes an adjustable filter.

12.      Apparatus according to claim 10 or 11 including storage means for recording the results of the comparisons in association with data identifying the corresponding studs.

13.      Apparatus according to claim 10, 11 or 12 including a second unit to which the portable unit can be connected, the second unit including storage means recording data for setting the selecting means and the predetermined values, the second unit having means for preventing alteration of the stored data, and means for overriding the preventing means.

14. Apparatus according to claim 13 wherein the portable unit is powered by a storage battery and the second unit includes means for recharging the storage battery.

15. Apparatus according to claim 13 or 14 and including the feature of claim 12, wherein the second unit includes printing means for producing a printed output of the results recorded in the storage means of the portable unit.

16. Apparatus according to any of claims 10 to 15 wherein the portable unit includes computing means having processing means with a program stored in a read-only memory and a random access memory as storage means for data, display means for displaying the results of the comparisons and a keyboard enabling an operator to enter identification numbers of studs.

17. Apparatus according to claim 16 wherein the portable unit is powered by a battery and the computing means has means responsive to the power level of the battery to cause the computing means to operate in a low power mode in which the data stored in the random access memory is preserved.

1/5

FIG.1.

FIG. 2.

FIG. 3.

FIG. 4.

4/5

FIG.5.

FIG.6.